# EUROPÄISCHE PATENTSCHRIFT

(11) **EP 0 386 306 B1**
(45) Veröffentlichungstag und Bekanntmachung des Hinweises auf die Patenterteilung: **09.02.1994**
(21) Anmeldenummer: 89110346.7
(22) Anmeldetag: 08.06.1989
(51) Int. Cl.: G11B 15/66, G11B 15/32

(54) **Schaltungsanordnung zur Vermeidung von zu grosser Stufenbildung im Bandwickel eines Aufnahme- und/oder Wiedergabegerätes**
Circuit for avoiding step forming in tape winding of a recording and/or reproducing apparatus
Circuit permettant d'éviter la formation de gradins dans un bobinage de bande d'un appareil d'enregistrement et/ou de reproduction

(30) Priorität: 07.03.1989 DE 3907265
(43) Veröffentlichungstag der Anmeldung: 12.09.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Mittelstädt, Rainer Grundig E.M.V., D-8510 Fürth (DE); Schaller, Otto Grundig E.M.V., D-8510 Fürth (DE)
(74) Vertreter: Dreykorn-Lindner, Werner, Dipl.-Ing.

(56) Entgegenhaltungen:
- DE-A- 3 743 838
- US-A- 4 558 179
- PATENT ABSTRACTS OF JAPAN, Bd. 13, Nr. 99 (E-724) 08 März 1989;& JP-A-63272259
- BRITISH KINEMATOGRAPHY, Bd. 63, Nr. 3, März 1982, London,GB;Seiten 126 - 127; Brian JENKINSON: "Long Term Storage of Video Tape"

## Beschreibung

Die Erfindung betrifft eine Schaltungsanordnung zur Vermeidung von zu großer Stufenbildung im Bandwickel eines Aufnahme- und/oder Wiedergabegeräts gemäß dem Oberbegriff der Patentansprüche 1, 2, 3 und 4.

Aus der nichtvorveröffentlichten deutschen Patentanmeldung P 37 43 838 ist ein Anrufbeantworter mit einem als Cassette ausgebildeten Bandspeicher für einen Ansagetext sowie mit einer Einrichtung zur Steuerung des Bandtransports und einem Ansagelaufwerk, welches das Band nach jeder Ansage in seine Ausgangsposition zurückspult, bekannt.

Anrufbeantworter dieser Art sind grundsätzlich bekannt. Sie haben jedoch einen entscheidenden Nachteil. Während immer wiederkehrender Abläufe des Ansagetextes wird das Band zunächst in Startrichtung bewegt und anschließend durch einen Rücklauf wieder in seine Ausgangsposition gebracht. Da sich dieser Vorgang sehr oft wiederholt, kann - z.B. unterstützt durch Unzulänglichkeiten in der Bandführung - bei den Bandwickeln in der Cassette eine Stufenbildung entstehen, mit der Folge, daß die Cassette schwergängig und im Grenzfall das Band beschädigt wird.

Zur Vermeidung einer zu starken Stufenbildung der Bandwickel, die eine Beeinträchtigung der Bandbewegung oder eine Beschädigung des Bandes zur Folge haben könnte, ist beim Gegenstand der deutschen Patentanmeldung P 37 43 838 eine Zähleinrichtung vorgesehen, die die Anzahl der Ansagezyklen zählt. Die Einrichtung zur Steuerung des Bandtransports erhält - beim Erreichen einer vorgegebenen Anzahl von Ansagezyklen - von der Zähleinrichtung ein Steuersignal, das zunächst den Vorlauf und anschließend den Rücklauf des Bandes auslöst, um nur das Ansageband zuerst in Vorwärts- und dann in Rückwärtsrichtung durchzuspulen. Schließlich ist eine Löschschaltung vorgesehen, die die Zähleinrichtung für einen neuen Zählzyklus auf Null zurücksetzt, sobald das Band nach dem Umspulen wieder seine Ausgangsposition für eine Ansage eingenommen hat. Eine Anregung, in welcher Weise eine zu große Stufenbildung bei einer Aufzeichnungscassette vermieden werden kann, ist der deutschen Patentanmeldung P 37 43 838 nicht entnehmbar.

In dem Artikel "Long Term Storage of Video Tapes" in "British Kinematograph Sound & Television Society Journal", Vol. 23, No. 3 (1982), Seiten 126/127 wird das Problem der Stufenbildung in Bandwickeln von Videobändern unter dem Gesichspunkt möglicher dauerhafter Schädigung der Bänder bei längerer Lagerung behandelt. In diesem Artikel wird vorgeschlagen, Videobänder von der Lagerung mit konstanter Bandspannung komplett umzuspulen.

Der vorliegenden Erfindung liegt die Aufgabe zugrunde, ausgehend von der deutschen Patentanmeldung P 37 43 838 eine Schaltungsanordnung so weiterzubilden, daß für ein beliebiges Aufnahme- und/oder Wiedergabegerät eine zu große Stufenbildung des Bandwickels vermieden werden kann.

Diese Aufgabe wird bei einer gattungsgemäßen Schaltungsanordnung durch die kennzeichnenden Merkmale der Patentansprüche 1 oder 2 oder 3 oder 4 gelöst.

Die Schaltungsanordnung nach Patentanspruch 1 kann bei einem beliebigen Aufnahme- und/oder Wiedergabegerät eingesetzt werden, z.B. Anrufbeantworter mit zwei als Cassette ausgebildeten Magnetbandspeichern oder Fernsprechapparat/Autotelefon mit Anrufbeantworter oder Auskunftssystem oder Diktiergerät oder Magnetbandgerät der Unterhaltungselektronik usw.. Dabei wird - in Abhängigkeit von der Anzahl von unmittelbar aufeinanderfolgenden und an die ursprüngliche Bandposition zurückkehrenden Bewegungsabläufen - zu einem
geeigneten Zeitpunkt das gesamte Band, einmal in Vorwärtsrichtung und einmal in Rückwärtsrichtung umgespult, wodurch eventuell entstandene Stufen im Bandwickel beseitigt werden.

Der Umspulvorgang kann auch, gemäß Patentanspruch 2, durch einen Motorstromindikator und einen mit diesem verbundenen Schwellwertschalter oder, gemäß Patentanspruch 3, durch eine an einer Regeleinrichtung des Motors abgreifbare Regelspannung oder, gemäß Patentanspruch 4, durch Auswertung von Signalen am Ausgang von zur Bandpositionierung dienenden Impulsgebern in einem Mikroprozessor ausgelöst werden. Diese Kriterien sind ein Maß für die tatsächliche Schwergängigkeit, während bei der Schaltungsanordnung nach Patentanspruch 1 nur eine empirisch ermittelte Faustregel als Auslösekriterium benutzt wird. Mit einem Motorstromindikator kann die Schwergängigkeit des Bandwickels auf einfache Art und Weise gemessen werden; der Schaltungsaufwand hierfür ist jedoch relativ groß. Bei einer Auslösung des Umspulvorgangs in Abhängigkeit von der Regelspannung ist zwar der Schaltungsaufwand geringer, jedoch muß bei der Dimensionierung die Streuung der Motorkonstanten mitberücksichtigt werden. Der Schaltungsaufwand kann weiter reduziert werden, wenn ein ohnehin im Aufnahme- und/oder Wiedergabegerät angeordneter Mikroprozessor mitbenutzt werden kann, wie dies beispielsweise für die Ermittlung der abgelaufenen Spielzeit bzw. Bandlänge und/oder Restlaufzeit von Cassetten oder Spulen bandförmiger Informationsträger aus der DE-PS 26 50 665 bekannt ist.

Die Auswertung der Gegen-EMK des Motors oder der Tachospannung, gemäß Patentanspruch 5, ist für die Steuerung des Bandtransports an sich aus der DE-OS 22 59 497 bekannt.

Ist gemäß der im Patentanspruch 7 angegebenen Ausführungsform eine Zähleinrichtung vorgesehen, die die Anzahl der eingegenen Anrufe ohne Nachrichtenaufzeichnung zählt, so kann das Durchspulen und Umspulen des Bandwickels der Aufzeichnungscassette unabhängig von der Anzahl der Ansagezyklen vorgenommen werden.

Bei der im Patentanspruch 8 angegebenen Ausführungsform können für die Zähleinrichtung handelsübliche, kostengünstige Vorwärtszähler eingesetzt werden.
- Fig. 1: eine erste Ausführungsform mit Zähleinrichtung zur Zählung von unmittelbar aufeinanderfolgenden und an die ursprüngliche Bandposition zurückkehrenden Bandbewegungsabläufen,
- Fig. 2: eine zweite Ausführungsform mit einem Motorstromindikator und einem mit diesem verbundenen Schwellwertschalter und
- Fig. 3: eine dritte Ausführungsform mit Messung der an einer Regeleinrichtung des Motors abgreifbaren Regelspannung.

Auch wenn im folgenden die Erfindung anhand der Benutzung bei einem Anrufbeantworter beschrieben ist, so ist der Einsatz bei allen Geräten möglich, welche einen Magnetbandspeicher aufweisen und bei denen eine Stufenbildung des Bandwickels zuverlässig vermieden werden soll (z. B. Streamer, Videorecorder). Gleiches gilt für Anrufbeantworter, welche einen digitalen Speicher für den Ansagetext und einen Bandspeicher für die Nachrichten der Anrufer aufweisen.

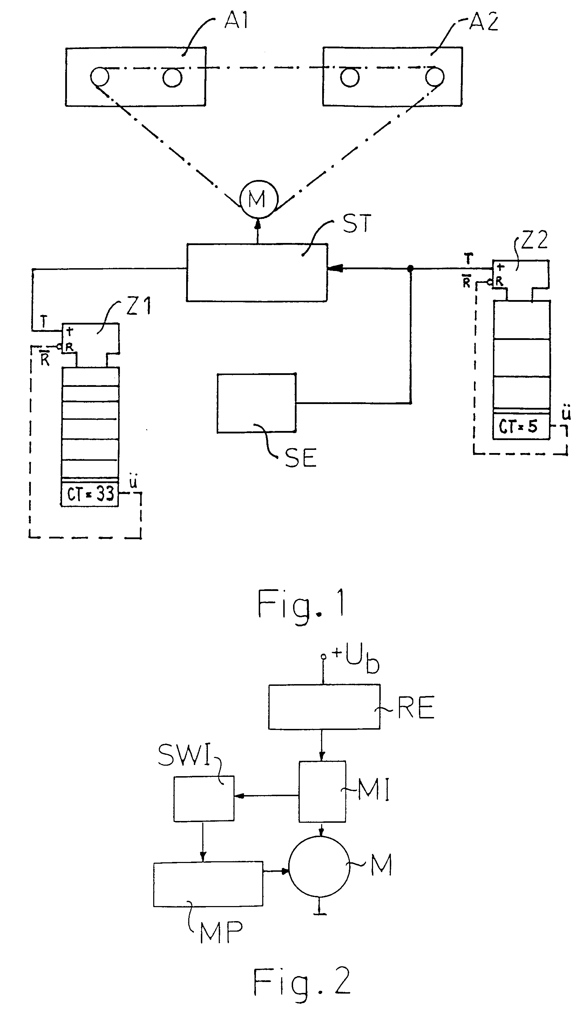

Gemäß der in Fig. 1 dargestellten ersten Ausführungsform der vorliegenden Erfindung ist eine Zähleinrichtung Z1 vorgesehen, die die Anzahl der Ansagezyklen zählt. Eine Einrichtung ST zur Steuerung des Bandtransportes (bzw. ein Mikroprozessor MP) erhält - beim Erreichen einer vorgegebenen Anzahl von Ansagezyklen - von der Zähleinrichtung Z1 ein Steuersignal, das zunächst den Vorlauf und anschließend den Rücklauf des Bandes der Ansagecassette A1 auslöst, um das Band zuerst in Vorwärts- und dann in Rückwärtsrichtung durchzuspulen. Danach wird das Band wieder in seine Ausgangsposition für eine Ansage umgespult. Im Vergleich zum Gegenstand der deutschen Patentanmeldung P 37 43 838 kann zusätzlich danach (oder zuvor) das Durchspulen und Umspulen des Bandwickels der Aufzeichnungscassette A2 vorgenommen werden. Einzelheiten des Laufwerkes, z.B. die Regeleinrichtung RE, sind in Fig. 1 nicht dargestellt.

Die Anzahl der Ansagezyklen, nach denen beide Bänder nacheinander einmal vor- und zurückgespult werden, wird empirisch ermittelt und kann zum Beispiel für eine Stenocassette bei 33 liegen. Die Anzahl der Ansagezyklen bis zum Durchspulen des Bandes der Aufzeichnungs- und Ansagecassette A2 und A1 kann vom Benutzer aber auch kleiner gewählt werden, wie dies beispielsweise bei einer Microcassette der Fall sein wird.

Neben der ersten kann weiterhin eine zweite Zähleinrichtung Z2 in Form eines Vorwärtszählers mit internem Rücksetzeingang (durch die gestrichelte Linie angedeutet) vorgesehen sein, welche mit der Einrichtung ST verbunden ist. Die beiden Laufwerke für die Ansagecassette A1 und die Aufzeichnungscassette A2 werden von demselben Motor M angetrieben (in der Figur durch die strichpunktierte Linie angedeutet). Mit der Einrichtung ST und der zweiten Zähleinrichtung Z2 ist eine Spracherkennungsschaltung SE (welche an die Fernmeldeleitung anschaltbar ist) verbunden, mit der Sprechpausen von z.B. mehr als 8 Sekunden erkannt werden können. Mit der Spracherkennungsschaltung SE kann zuverlässig detektiert werden, wann z.B. der Anrufer aufgelegt hat und mittels im Anrufbeantworter angeordneten Mikroprozessor MP und/oder Einrichtung ST wird der Anrufbeantworter abgeschaltet und das Laufwerk für die Aufzeichnungscassette A2 stillgesetzt. Ist ein solcher Mikroprozessor MP vorhanden, so kann dieser die Funktion der beiden Zähleinrichtungen Z1 und Z2 übernehmen, welche dann entfallen können. Eine im Anrufbeantworter angeordnete Einrichtung zur automatischen Pausenreduzierung sorgt dafür, daß zwischen den Nachrichten der einzelnen Anrufer keine Pausen von z.B. mehr als zwei Sekunden entstehen.

Der Ansagetext ist in der Regel in Meldung, Mitteilung mit Sprechaufforderung an den Anrufer und Schlußansage gegliedert. Nach der Schlußansage wird dann das Laufwerk der Aufzeichnungscassette A2 vom Motor M angetrieben. Legt der Anrufer nach der Schlußansage auf, so wird dies spätestens nach 8 sec. mittels Spracherkennungsschaltung SE erkannt, das Band der Aufzeichnungscassette A2 wieder in seine Ausgangsposition zurückgespult und der Zählerstand der Zähleinrichtung Z2 um eins erhöht. Für den Fall, daß die vorgegebene Anzahl eingegangener Anrufe ohne Nachrichtenaufzeichnung von z.B. fünf überschritten wird, wird das Band der Aufzeichnungscassette A2 zuerst in Vorwärts- und dann in Rückwärtsrichtung (oder umgekehrt) durchgespult und anschließend wieder in die Ausgangsposition umgespult. Die Ausgangsposition kann beispielsweise aus der Umdrehungsgeschwindigkeit des Laufwerks der Aufzeichnungscassette A2 abgeleitet werden. Weiterhin ist es auch möglich, die Ausgangsposition in einem digitalen Speicher abzulegen und mittels Mikroprozessor MP und/oder Vorwärts-/Rückwärtszähler diese Ausgangsposition wieder anzufahren, wobei die Zählimpulse durch Abtastung eines der Wickel gewonnen werden.

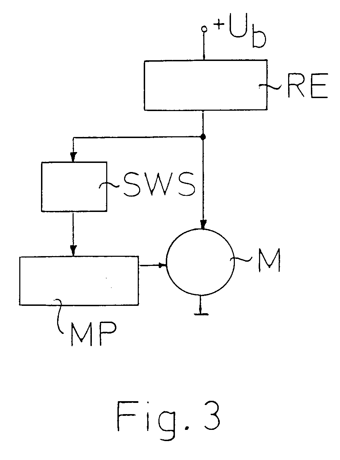

Bei der in Fig. 2 dargestellten Ausführungsform sind die Zähleinrichtungen Z1 und Z2 durch einen Motorstrom-Indikator MI ersetzt, der die zunehmende Schwergängigkeit des Bandwickels bzw. einer Cassette über den höheren Motorstrom detektiert. Beim Überschreiten eines vorgegebenen Schwellwertes wird das Durchspulen der Cassetten und Umspulen in die Ausgangsposition ausgelöst. Hierzu ist der Motorstrom-Indikator MI sowohl mit einer Regeleinrichtung RE als auch mit einem Schwellwertschalter SWI verbunden, welcher an einem Mikroprozessor MP angeschlossen ist.

Bei der in Fig. 3 dargestellten Ausführungsform ist mit der Regeleinrichtung RE und mit dem Motor M eine Schwellwertschaltung SWS verbunden, welche an den Mikroprozessor MP angeschlossen ist. Die an der Regeleinrichtung RE abgreifbare Regelspannung löst den Umspulvorgang der Bänder aus und mittels Mikroprozessor MP wird das Band wieder in die ursprüngliche Ausgangsposition zurückgespult. Als Schwellwert kann die Gegen-EMK des Motors M oder die Tachospannung dienen.

Bei einer in der Zeichnung nicht dargestellten Ausführungsform können auch die Signale am Ausgang von zur Bandpositionierung dienenden Impulsgebern in einem Mikroprozessor MP ausgewertet werden. Dieser ermittelt daraus die jeweilige Bandposition und die zugehörige Soll-Bandgeschwindigkeit. Beim Überschreiten einer zulässigen Abweichung von der Soll-Bandgeschwindigkeit wird wiederum das gesamte Band für zwei Bänder gleichzeitig oder nacheinander zuerst in Vorwärts- und dann in Rückwärtsrichtung umgespult und nach dem Umspulvorgang wird das Band wieder in die ursprüngliche Ausgangsposition zurückgespult.

## Patentansprüche

1. Schaltungsanordnung zur Vermeidung von zu großer Stufenbildung im Bandwickel eines Aufnahme- und/oder Wiedergabegerätes, welches ein Laufwerk aufweist, dessen Bandwickel von einem Motor (M) mit Regeleinrichtung (RE) angetrieben wird,
**dadurch gekennzeichnet**,
daß eine Zähleinrichtung (Z1) vorgesehen ist, welche die Anzahl von unmittelbar aufeinanderfolgenden und an die ursprüngliche Bandposition zurückkehrenden Bandbewegungsabläufen zählt, und daß die Schaltungsanordnung derart ausgebildet ist, daß beim Erreichen einer vorgegebenen Anzahl solcher Bewegungsabläufe das gesamte Band zuerst in Vorwärts- und dann in Rückwärtsrichtung umgespult und nach dem Umspulvorgang das Band wieder in die ursprüngliche Ausgangsposition zurückgespult wird.

2. Schaltungsanordnung nach dem Oberbegriff des Anspruchs 1,
**dadurch gekennzeichnet**,
daß ein sowohl mit dem Motor (M) als auch mit der Regeleinrichtung (RE) verbundener Motorstromindikator (MI) vorgesehen ist und daß die Schaltungsanordnung derart ausgebildet ist, daß beim Überschreiten eines Schwellwerts, welcher durch einem mit dem Motorstromindikator (MI) verbundenen Schwellwertschalter (SWI) vorgebbar ist, das gesamte Band zuerst in Vorwärts- und dann in Rückwärtsrichtung umgespult und nach dem Umspulvorgang das Band wieder in die ursprüngliche Ausgangsposition zurückgespult wird.

3. Schaltungsanordnung nach dem Oberbegriff des Anspruchs 1,
**dadurch gekennzeichnet**,
daß eine mit der Regeleinrichtung (RE) und mit dem Motor (M) verbundene Schwellwertschaltung (SWS) vorgesehen ist und daß die Schaltungsanordnung derart ausgebildet ist, daß in Abhängigkeit der an der Regeleinrichtung (RE) abgreifbaren Regelspannung, das gesamte Band zuerst in Vorwärts- und dann in Rückwärtsrichtung umgespult und nach dem Umspulvorgang das Band wieder in die ursprüngliche Ausgangsposition zurückgespult wird.

4. Schaltungsanordnung nach dem Oberbegriff des Anspruchs 1,
**dadurch gekennzeichnet**,
daß die Signale am Ausgang von zur Bandpositionierung dienenden Impulsgebern in einem Mikroprozessor (MP) ausgewertet werden, welcher daraus die jeweilige Bandposition und die zugehörige Soll-Bandgeschwindigkeit ermittelt und welcher, beim Überschreiten einer zulässigen Abweichung von der Soll-Bandgeschwindigkeit, veranlaßt, daß das gesamte Band zuerst in Vorwärts- und dann in Rückwärtsrichtung umspult und nach dem Umspulvorgang das Band wieder in die ursprüngliche Ausgangsposition zurückgespult wird.

5. Schaltungsanordnung nach Anspruch 3,
**dadurch gekennzeichnet**,
daß der Schwellwert aus der Gegen-EMK des Motors (M) oder einer Tachospannung abgeleitet wird.

6. Schaltungsanordnung nach Anspruch 1,
**dadurch gekennzeichnet**,
daß als Aufnahme- und/oder Wiedergabegerät ein Anrufbeantworter mit als Cassetten ausgebildetem Magnetbandspeicher für einen Ansagetext und/oder für die Aufzeichnung von Nachrichten des Anrufers vorgesehen ist und daß mittels der Zähleinrichtung (Z1) und einer Einrichtung (ST) zur Steuerung des Bandtransports, das Durchspulen und Umspulen der Ansagetextcassette (A1) und/oder der Aufzeichnungscassette (A2) gesteuert wird.

7. Schaltungsanordnung nach Anspruch 6,
**dadurch gekennzeichnet**,
daß eine weitere Zähleinrichtung (Z2) vorgesehen ist, welche die Anzahl der eingegangenen Anrufe ohne Nachrichtenaufzeichnung zählt, und welche zusammen mit der Einrichtung (ST) zur Steuerung des Bandtransportes das Durchspulen und Umspulen der Aufzeichnungscassette (A2) steuert.

8. Schaltungsanordung nach Anspruch 1,
**dadurch gekennzeichnet**,
daß als Zähleinrichtung (Z1, Z2) ein Vorwärtszähler mit internem Rücksetzeingang vorgesehen ist.

## Claims

1. Circuit arrangement for avoiding excessive step formation in the roll of tape of a recording and/or playback device, which has a drive, the roll of tape of which is driven by a motor (M) with a control device (RE), characterized in that a counting device (Z1) is provided, which counts the number of tape movement sequences immediately following one another and returning to the original tape position, and in that the circuit arrangement is designed in such a way that, on reaching a predetermined number of such movement sequences, the entire tape is rewound first of all in the forward direction and then in the reverse direction and, after the rewinding operation, the tape is wound back again into the original initial position.

2. Circuit arrangement according to the precharacterizing clause of Claim 1, characterized in that a motor current indicator (MI), connected both to the motor (M) and to the control device (RE), is provided and in that the circuit arrangement is designed in such a way that, upon exceeding a threshold value, which can be predetermined by a threshold switch (SWI) connected to the motor current indicator (MI), the entire tape is rewound first of all in the forward direction and then in the reverse direction and, after the rewinding operation, the tape is wound back again into the original initial position.

3. Circuit arrangement according to the precharacterizing clause of Claim 1, characterized in that a threshold circuit (SWS), connected to the control device (RE) and to the motor (M), is provided and in that the circuit arrangement is designed in such a way that, in dependence on the control voltage which can be picked off at the control device (RE), the entire tape is rewound first of all in the forward direction and then in the reverse direction and, after the rewinding operation, the tape is wound back again into the original initial position.

4. Circuit arrangement according to the precharacterizing clause of Claim 1, characterized in that the signals at the output of pulse generators serving for tape positioning are evaluated in a microprocessor (MP), which determines from the said signals the respective tape position and the associated desired tape speed and which, on exceeding a permissible deviation from the desired tape speed, causes the entire tape to be rewound first of all in the forward direction and then in the reverse direction and, after the rewinding operation, the tape is wound back again into the original initial position.

5. Circuit arrangement according to Claim 3, characterized in that the threshold value is derived from the counter-e.m.f. of the motor (M) or from a tacho-voltage.

6. Circuit arrangement according to Claim 1, characterized in that an answering machine with magnetic tape memory, designed as cassettes, for an announcement text and/or for the recording of messages of the caller is provided as the recording and/or playback device and in that the winding through and rewinding of the announcement text cassette (A1) and/or of the recording cassette (A2) is controlled by means of the counting device (Z1) and a device (ST) for controlling the tape transport.

7. Circuit arrangement according to Claim 6, characterized in that a further counting device (Z2) is provided, which counts the number of incoming calls without message recording, and which, together with the device (ST) for controlling the tape transport, controls the winding through and rewinding of the recording cassette (A2).

8. Circuit arrangement according to Claim 1, characterized in that a forward counter with internal resetting input is provided as the counting device (Z1, Z2).

## Revendications

1. Montage pour éviter une formation trop importante de plis dans l'enroulement de la bande d'un appareil d'enregistrement/reproduction, qui comporte un dérouleur, dont le rouleau de bande est entraîné par un moteur (M) comportant un dispositif de régulation (RE), caractérisé en ce qu'il est prévu un dispositif de comptage (Z1), qui compte le nombre de cycles de déplacement de la bande, qui se succèdent directement et ramènent à la position initiale de la bande, et que le montage est agencé de telle sorte que, lorsqu'un nombre prédéterminé de tels cycles de déplacement est atteint, l'ensemble de la bande est enroulé tout d'abord dans le sens direct, puis dans le sens inverse et, après l'opération d'enroulement, la bande est rembobinée en étant à nouveau amenée dans la position de départ initiale.

2. Montage selon le préambule de la revendication 1, caractérisé en ce qu'il est prévu un indicateur (MI) du courant du moteur, qui est raccordé aussi bien au moteur (M) qu'au dispositif de régulation (RE) et que le montage est agencé de telle sorte que lors du dépassement d'une valeur de consigne, qui peut être prédéterminée par un commutateur à valeur de seuil (SWI) relié à l'indicateur (MI) du courant du moteur, l'ensemble de la bande est enroulé tout d'abord dans le sens direct, puis dans le sens inverse et, après l'opération d'enroulement, la bande est rembobinée en étant à nouveau amenée dans la position de départ initiale.

3. Montage selon le préambule de la revendication 1, caractérisé en ce qu'il est prévu un circuit à valeur de seuil (SWS), qui est raccordé au dispositif de régulation (R1) et au moteur (M) et que le montage est agencé de telle sorte qu'en fonction de la tension de régulation pouvant être prélevée sur le dispositif de régulation (RE), l'ensemble de la bande est enroulé tout d'abord dans le sens direct, puis dans le sens inverse et qu'après l'opération d'enroulement, la bande est rembobinée en étant amenée à nouveau dans la position de départ initiale.

4. Montage selon le préambule de la revendication 1, caractérisé en ce que les signaux présents à la sortie de générateurs d'impulsions utilisés pour le positionnement de la bande, sont évalués dans un microprocesseur (MP), qui détermine, à partir de là, la position respective de la bande et la vitesse de consigne associée de la bande et qui, lors du dépassement d'un écart admissible par la vitesse de consigne de la bande, agit de telle sorte que l'ensemble de la bande est réenroulé tout d'abord dans le sens direct, puis dans le sens rétrograde et, qu'après l'opération d'enroulement, la bande est rembobinée en étant amenée à nouveau dans la position de départ initiale.

5. Montage selon la revendication 3, caractérisé en ce que la valeur de seuil est dérivée de la force contre-électromotrice du moteur (M) ou d'une tension tachymétrique.

6. Montage selon la revendication 1, caractérisé en ce qu'il est prévu, comme appareil d'enregistrement et/ou de reproduction, un répondeur d'appels comportant une mémoire à bande magnétique agencée sous la forme d'une cassette, pour un texte d'annonce et/ou pour l'enregistrement d'informations de la personne appelant, et que le déroulement et l'enroulement de la cassette (A1) contenant le texte d'annonce et/ou de la cassette d'enregistrement (A2) sont commandés au moyen du dispositif de comptage (Z1) et d'un dispositif (ST) servant à commander le transport de la bande.

7. Montage selon la revendication 8, caractérisé en ce qu'il est prévu un autre dispositif de comptage (Z2), qui compte le nombre des appels arrivés sans enregistrement d'informations et qui commande, conjointement avec le dispositif de commande (ST) servant à commander le transport de la bande, le déroulement et l'enroulement de la cassette d'enregistrement (A2).

8. Montage selon la revendication 1, caractérisé en ce qu'il est prévu, comme dispositif de comptage (Z1, Z2), un compteur progressif comportant une entrée interne de remise à zéro.
